# EUROPÄISCHE PATENTANMELDUNG

(11) **EP 0 696 777 A2**
(43) Veröffentlichungstag der Anmeldung: **14.02.1996**
(21) Anmeldenummer: 95112368.6
(22) Anmeldetag: 05.08.1995
(51) Int. Cl.: G06K 19/04

(54) **Befestigungsvorrichtung zum Befestigen eines elektronischen Bauteils an einem Gegenstand**

(30) Priorität: 13.08.1994 DE 9413127 U
(71) Anmelder: HEINRICH AXMANN KG KUNSTSTOFF PLASTIK-WERK, D-50999 Köln (DE)
(72) Erfinder: Axmann, Heinrich, D-50999 Köln (DE); Axmann, Heiner, D-50999 Köln (DE)
(74) Vertreter: Selting, Günther

(57) **Zusammenfassung**

Die Erfindung betrifft eine Befestigungsvorrichtung (1) zum Befestigen eines elektronischen Bauteils (41) an einem Gegenstand (3). Um das elektronische Bauteil (41) an dem Gegenstand (3) gesichert verfügbar zu machen, weist die Befestigungsvorrichtung (1) ein das elektronische Bauteil (41) aufnehmendes geschlossenes Gehäuse (5) auf. Die Befestigungsvorrichtung (1) ist darüber hinaus mit Rastmitteln (7) zum Angriff an einem Vorsprung (13) des Behälters (3) versehen.

## Beschreibung

Die Erfindung betrifft eine Befestigungsvorrichtung zum Befestigen eines elektronischen Bauteils an einem Gegenstand.

In der modernen Industriegesellschaft werden in allen Lebensbereichen eine Vielzahl von gasförmigen, flüssigen, pastösen oder festen Stoffen zu unterschiedlichsten Anwendungszwecken verwendet. Um diese Stoffe verfügbar zu machen, sind in der Regel der Transport und die Lagerung der Stoffe in Behältern erforderlich. Zur Abwicklung von Transport und Lagerung werden bisher Transportpapiere verwendet und eine Lagerbuchführung durchgeführt. Bei der Zuordnung von Daten zu den Behältern kommt es durch menschliches Versagen immer wieder zu Verwechslungen, was zu nicht absehbaren Folgen, z.B. Unfällen führen kann.

Auch bei anderen Gegenständen als den oben genannten Behältern, beispielsweise bei Fahrzeugen oder bei Bearbeitungsstationen besteht die Gefahr, daß Daten falsch zugeordnet werden.

Um die Sicherheit zu erhöhen, bestand daher der Wunsch, Daten leicht und sicher abrufbar und im direkten Zusammenhang mit dem jeweiligen Gegenstand festzuhalten.

Leistungsfähige Datenspeicher als Bestandteile elektronischer Bauteile sind aus der Elektronik bekannt. Jedoch sind diese so empfindlich, daß eine Verwendung der elektronischen Bauteile im direkten Zusammenhang mit mobilen Behältern nicht ohne weiteres in Betracht kommt.

Der Erfindung liegt daher die Aufgabe zugrunde, ein elektronisches Bauteil an einem Gegenstand gesichert verfügbar zu machen.

Die Lösung dieser Aufgabe erfolgt erfindungsgemäß mit den Merkmalen des Anspruchs 1.

Bei der erfindungsgemäßen Befestigungsvorrichtung zur Befestigung eines elektronischen Bauteils an einem Gegenstand ist das elektronische Bauteil in einem geschlossenen Gehäuse aufgenommen, wobei die Befestigungsvorrichtung Rastmittel zum Angriff an einem Vorsprung des Behälters aufweist. Mit dem geschlossenen Gehäuse wird sichergestellt, daß das elektronische Bauteil sicher vor schädigenden Umwelteinflüssen geschützt ist. Die geschützte Lagerung erst ermöglicht einen zuverlässigen Betrieb des elektronischen Bauteils. Die zum Angriff an einem Vorsprung des Behälters vorgesehenen Rastmittel dienen dazu, die Befestigungsvorrichtung an dem Behälter festzulegen. Durch das Einrasten der Rastmittel an dem Vorsprung wird sichergestellt, daß das elektronische Bauteil zuverlässig mit dem Gegenstand verbunden ist und daher jederzeit zur Verfügung steht. Die Rastmittel haben darüber hinaus den Vorteil, eine besonders leichte Montage der Befestigungsvorrichtung zu erlauben.

Vorzugsweise sind die Rastmittel Zähne, die mit einer Sollbruchstelle versehen sind und nur eine einmalige Anbringung der Befestigungsvorrichtung erlauben. Die Zähne erleichtern zudem das Anbringen der Befestigungsvorrichtung, da sie federnd nachgeben, wobei gleichzeitig ein Originalitätsnachweis dadurch erfolgt, daß die Zähne wegen ihrer Sollbruchstelle nur eine einmalige Anbringung der Befestigungsvorrichtung erlauben. Durch den mit der Ausgestaltung der Zähne einhergehenden Originalitätsnachweis wird sichergestellt, daß vorsätzliche oder fahrlässige Vertauschungen der dem jeweiligen Gegenstand zugeordneten elektronischen Bauteile nicht erfolgen können. Ein sicherer Originalitätsnachweis ist insbesondere bei Gefahrgut im Controlling, zum Eigentumsnachweis, im Gesundheitssektor, im Nahrungsmittelsektor insbesondere bei Flüssigkeiten, aber auch im Sektor der technische Gase verwendenden Industrie aus Sicherheitsgründen sehr gewünscht.

Um das Einrasten bei der Befestigung der Befestigungsvorrichtung an dem Gegenstand zu erleichtern, können die Zähne Abschrägungen aufweisen, die Erhebungen des Behälters übergleiten können. Dadurch, daß die Zähne nur einseitig angeschrägt sind, wird erreicht, daß die Befestigungsvorrichtung im eingerasteten Zustand gegen Abnehmen der Befestigungsvorrichtung zuverlässig gesichert ist.

Im eingerasteten Zustand können die Rastmittel den Gegenstand einklemmen, wobei sie derart vorgespannt sind, daß die Sollbruchstelle unter Vorspannung ist. Die klemmende Befestigung der Befestigungsvorrichtung verhindert Relativbewegungen der Befestigungsvorrichtung gegenüber dem Gegenstand und trägt damit zur Betriebssicherheit des elektronischen Bauteils bei. Die Vorspannung der Sollbruchstelle bewirkt, daß unbefugte Manipulation an der Befestigungsvorrichtung mit Sicherheit zu einer Zerstörung der Befestigungsvorrichtung führen, so daß auf diese Weise die Zuverlässigkeit des Originalitätsnachweises erhöht wird.

Vorzugsweise sind Gehäuse und Rastmittel einstückig ausgebildet. Durch diese Verringerung der Anzahl der zur Herstellung der Befestigungsvorrichtung erforderlichen Bauteile werden der Fertigungsaufwand und damit die Herstellungskosten gesenkt.

Das Gehäuse kann ringförmig oder scheibenförmig ausgebildet sein. Die ringförmige Ausgestaltung des Gehäuses ist insbesondere für Behälter geeignet, die eine Verjüngung nach Art eines Halses aufweisen. Bei solchen Behältern kann die Befestigungsvorrichtung derart über die Verjüngung gestülpt werden, daß das Gehäuse von dem Behälter in jeder Richtung überragt wird, so daß die Befestigungsvorrichtung auch bei einem Umstürzen des Behälters gesichert ist. Bei einer scheibenförmigen Ausbildung des Gehäuses mit runder oder rechteckiger Grundfläche kann das Einbauvolumen des Gehäuses minimiert werden. Kreisscheibenförmige Gehäuse mit runder Grundfläche sind insbesondere bei der Herstellung vorteilhaft, da sie das Reibschweißen ermöglichen. Beim Recycling erlauben rotationssymmetrische Gehäuse den Einsatz von Drehbänken zum Zerlegen der Gehäuse. Darüberhinaus lassen sich die Formen zur Herstellung rotationssymmetrischer Gehäuse kostengünstig herstellen.

Wenn die Zähne am Innenumfang des Gehäuses radial nach innen ragen, erlauben sie die Zentrierung der Befestigungsvorrichtung koaxial zu einer Verjüngung des Gehäuses. Ist das Gehäuse scheibenförmig, ragen Zungen als Rastmittel vom Außenumfang der Scheibe nach außen. Diese Zungen bewirken mit einem rohrförmigen Ansatz eine Zentrierung.

Gemäß einer bevorzugten Ausführungsform besteht das Gehäuse aus einem Ring mit U-förmigen Querschnitten und einem im wesentlichen flachen ringförmigen Deckel, die miteinander verbunden sind. Das Gehäuse, das auf diese Weise zweiteilig hergestellt ist, läßt sich in besonders einfacher Weise mit dem elektronischen Bauteil bestücken, da durch den U-förmigen, umlaufenden inneren Hohlraum des Rings eine von oben leicht zugängliche Aufnahmekammer gebildet ist. Darüber hinaus hat der flache ringförmige Deckel den Vorteil, sich mit einem einfachen Werkzeug herstellen zu lassen und während der Zwischenlagerung vor dem Verbinden einfach stapelbar zu sein.

Bei der Ausführung des Rings mit zwei sich in axialer Richtung konisch verjüngenden Ringrippen und bei einer Ausgestaltung des Deckels mit konischen Ringnuten kann das Fügen von Ring und Deckel schnell und einfach durchgeführt werden, da die konischen Flächen beider Teile automatisch eine Zentrierung bewirken.

Zwei den Deckel und den Ring verbindende Ringschweißnähte bewirken, daß das Gehäuse nicht nur staub- sondern auch wasserdicht geschlossen ist.

Das Gehäuse besteht vorzugsweise aus Napf und einem flachen Deckel, die miteinander verbunden sind. Bei einer solchen Ausgestaltung umschließt der Napf auch bei abgenommenen Deckel das elektronische Bauteil an fünf Seiten, so daß das Bauteil auch beim Zusammenbau des Gehäuses gut geschützt ist. Eine bei dieser Ausführungsform vorgesehene Ringschweißnaht bewirkt einen staub- und wasserdichten Einschluß des elektronischen Bauteils.

Vorzugsweise sind die Ringschweißnähte durch Reibschweißung gebildet, da sich diese Art der Verschweißung besonders einfach durchführen läßt. Darüber hinaus hat das Reibschweißverfahren den Vorteil, in dem Ring befindliche elektronische Bauteile nicht zu beschädigen, wie es z.B. durch induzierte Ströme beim Ultraschallschweißen der Fall sein kann.

Das Gehäuse ist vorzugsweise durch innere Versteifungsspanten verstärkt. Diese verhindern, daß das Gehäuse zusammengedrückt werden kann und erhöhen außerdem die Steifigkeit des Gehäuses.

Gemäß einer bevorzugten Ausführungsform ist das elektronische Bauteil auf Lagerstiften gelagert. Diese Lagerstifte greifen an dem elektronischen Bauteil an und verhindern so, daß das elektronische Bauteil relativ zu dem Gehäuse bewegbar ist. Wenn die Lagerstifte säulenartig aus einigen der Aussteifungsspanten hervorstehen, wird dadurch die Sicherheit der Lagerstifte gegen Abbrechen erhöht. Außerdem wird die Anzahl der den nutzbaren Raum innerhalb des Gehäuses begrenzenden Einbauten verringert. Zur Abstützung des elektronischen Bauteils können die Aussteifungsspanten an die Lagerstifte angrenzende Schultern aufweisen. Dies erlaubt es, daß Aussteifungsspanten und Lagerstifte aus einfachen geometrischen Grundkörpern aufgebaut werden können, was zu Erleichterungen bei der Fertigung führt. Auch wird durch die angrenzenden Schultern sichergestellt, daß das elektronische Bauteil sich in einem sicheren Abstand von den Aussteifungsspanten befindet. Dadurch werden Beschädigungen durch Kollision von Aussteifungsspanten und elektronischem Bauteil verhindert.

Bei einer bevorzugten Ausführungsform ist an dem Gehäuse eine Ringrippe gebildet, die dem Lagerstift in axialer Richtung des Gehäuses mit geringem Abstand gegenüberliegt. Diese Ringrippe stellt sicher, daß die Lagerstifte mit dem elektronischen Bauteil im Eingriff bleiben, wobei es wegen der Ringform der Ringrippe nicht erforderlich ist, eine exakte Positionierung von Deckel und Ring in Verdrehrichtung einzuhalten. Wenn an dem Deckel, dem Ring oder Napf radiale Sägezahnrippen vorgesehen sind, wird dadurch die Herstellbarkeit der Reibschweißnaht weiter erleichtert.

Vorzugsweise sind an dem Innenumfang des Gehäuses äußere Abstandshalter vorgesehen. Diese Abstandshalter können schmale Rippen sein, die verhindern, daß das Gehäuse direkt an dem Behälter anliegt. Dadurch können Flüssigkeiten und Gase, z.B. solche, die aus dem Behälter austreten können, zwischen dem Behälter und dem Gehäuse der Befestigungsvorrichtung ablaufen.

Vorzugsweise ist das Gehäuse wasserdicht ausgebildet. Dies erlaubt einen Einsatz der Befestigungsvorrichtung auch bei Behältern, die in feuchten Umgebungen eingesetzt werden sollen.

Gemäß einer weiteren bevorzugten Ausführungsform ist das Gehäuse säure- und laugenbeständig ausgeführt, so daß die Befestigungsvorrichtung auch bei Transportbehältern für Säuren und Laugen eingesetzt werden kann. Darüber hinaus ist bei einer solchen Ausgestaltung des Gehäuses auch eine Reinigung der Befestigungsvorrichtung mit verschiedensten Reinigungsmitteln möglich, was insbesondere beim Einsatz der Befestigungsvorrichtung im Bereich der Medizin oder des Lebensmitteltransports erforderlich ist.

Vorzugsweise ist das Gehäuse bis ca. 200 °C hitzebeständig. Die Hitzebeständigkeit erlaubt es, die Befestigungsvorrichtung auch an solchen Stellen des Behälters anzuordnen, die hohen Temperaturen ausgesetzt sind, beispielsweise am Hals einer Gasflasche beim Befüllen mit Gasen. Wenn das Gehäuse bis ca. -80° C kältebeständig ist, ist ferner sichergestellt, daß die Befestigungsvorrichtung auch im Tieftemperaturbereich sicher eingesetzt werden kann.

Gemäß einer bevorzugten Ausführungsform besteht das Gehäuse im wesentlichen aus Polyamid oder Pocan®. Diese Kunststoffe vereinigen in sich eine besonders günstige Kombination aus chemischer und mechanischer Beständigkeit, auch beim Einsatz in einem breiten Temperaturbereich.

Weitere vorteilhafte Ausgestaltungen und Weiterbildungen der Erfindung ergeben sich aus den Unteransprüchen sowie aus der Beschreibung im Zusammenhang mit der Zeichnung.

Es zeigen:
- Fig. 1: eine erste Ausführungsform einer Befestigungsvorrichtung zur Befestigung eines elektronischen Bauteils an einer Gasflasche,
- Fig. 2: die Befestigungsvorrichtung in Fig. 2 im Schnitt,
- Fig. 3: die Befestigungsvorrichtung in Fig. 1 mit abgenommenem Deckel in einer Ansicht von oben,
- Fig. 4: den Deckel der Befestigungsvorrichtung in Fig. 1 in geschnittener Darstellung,
- Fig. 5: einen Ring der Befestigungsvorrichtung in Fig. 1 in geschnittener Darstellung,
- Fig. 6: einen Abschnitt des Deckels in Fig. 4 und des Rings in Fig. 5 in vergrößerter Darstellung,
- Fig. 7: eine Sägezahnrippe des Deckels in Fig. 4 im Schnitt,
- Fig. 8: den Deckel in Fig. 4 mit teilweise weggebrochenen Bereichen in einer Ansicht von oben,
- Fig. 9: eine zweite Ausführungsform der Befestigungsvorrichtung zur Befestigung eines elektronischen Bauteils an einem Getränkefaß,
- Fig.10: die Befestigungsvorrichtung in Fig. 9 in vergrößerter Darstellung,
- Fig.11: den Ausschnitt XI in Figur 10 in vergrößerter Darstellung,
- Fig.12: die zweite Ausführungsform der Befestigungsvorrichtung gemäß dem Schnitt XII-XII in Figur 10, und
- Fig.13: einen Schnitt durch die Befestigungsvorrichtung gemäß den Pfeilen XIII-XIII in Figur 12.

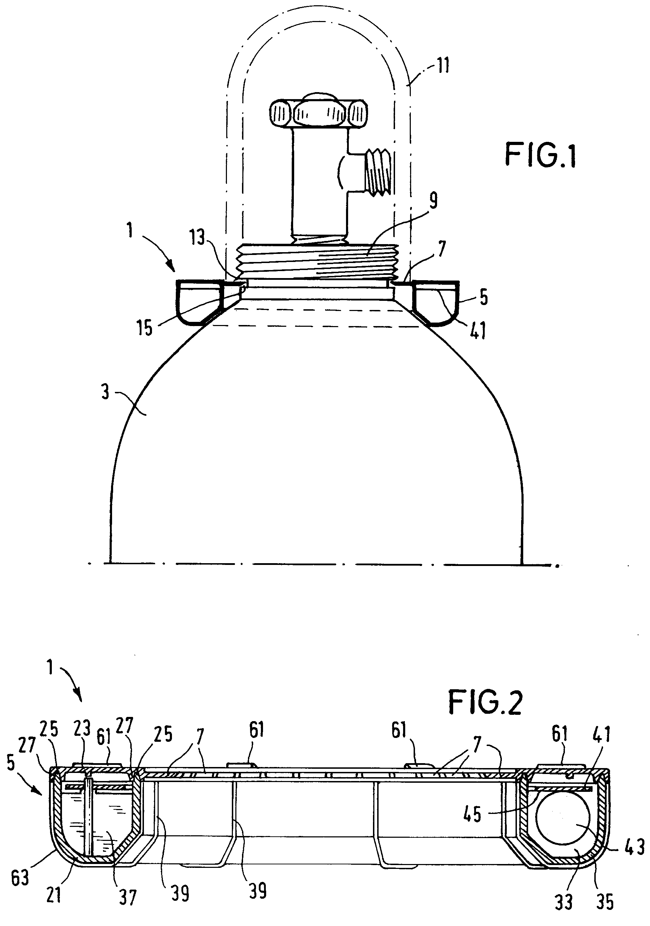

In Fig. 1 ist eine Befestigungsvorrichtung 1 zur Befestigung eines elektronischen Bauteils gezeigt, die an einem Behälter, der in Fig. 1 eine Gasflasche 3 ist, festgelegt ist. Die Befestigungsvorrichtung 1 weist ein geschlossenes Gehäuse 5 und Rastmittel 7 auf, die von dem Gehäuse 5 radial nach innen vorspringen und unterhalb eines durch das Gewinde 9 der Gasflaschenabdeckung 11 gebildeten Vorsprungs 13 angreifen. Der Vorsprung 13 hat gegenüber einer Rille 15 der Gasflasche 3, in die die Rastmittel 7 angreifen, zwar nur eine Tiefe im Bereich von etwa 1 mm, jedoch ist dieser Vorsprung 13 für eine sichere Befestigung der Befestigungsvorrichtung 1 ausreichend, da er unterhalb des Gewindeauslaufs des Gewindes 9 liegt, so daß die Befestigungsvorrichtung 1 nicht von der Gasflasche 3 geschraubt werden kann.

Die Befestigungsvorrichtung 1 umringt das obere Ende der Gasflasche 3 quasi kragenartig. Bei dieser Ausgestaltung ist die Axialrichtung des Gehäuses 5 durch die Längsachse der Gasflasche 3 definiert, wobei die Radialrichtung senkrecht dazu in der Ebene des Gehäuses 5 verläuft.

Fig. 2 zeigt die in Fig. 1 dargestellte Befestigungsvorrichtung 1 im Schnitt. Das Gehäuse 5 besteht aus einem aus Kunststoff geformten Ring 21, der im wesentlichen U-förmige Querschnitte aufweist und einem flachen, ringförmigen Deckel 23, der mit dem Ring 21 verbunden ist. Zur Verbindung von Ring 21 und Deckel 23 greifen sich in axialer Richtung konisch verjüngende Ringrippen 25 mit konischen Ringnuten 27 des Deckels 23 zusammen. Ring 21 und Deckel 23 sind miteinander verschweißt.

Die Zähne 7, die als Rastmittel an der Gasflasche 3 angreifen, sind flache Zungen mit einer einseitigen, an ihrer Unterseite am inneren Umfangsrand angeordneten 45°-Anschrägung 29, die einstückig mit dem Deckel 23 geformt sind. Sie liegen in einer Ebene, die dicht unterhalb der Ebene der Deckeloberseite liegt. Da die Deckeloberseite und die Zähne 7 in unterschiedlichen Ebenen liegen, weisen die Zähne 7 als Sollbruchstelle 31 eine Abbrechkante auf.

Im Innern des Gehäuses 5 ist ein Hohlraum 33 gebildet, der durch die U-förmige Wand 35 des Rings 21 und durch den flache Deckel 23 begrenzt. In dem Hohlraum 35 sind radiale Aussteifungsspanten 37 vorgesehen, die das Gehäuse 5 aussteifen. Am Innenumfang des Gehäuses 5 sind Abstandshalter 39 angeordnet, die als trapezförmige Rippen über die Ebene der Wand des Gehäuses 5 vorragen.

In dem Hohlraum 33 ist ein elektronisches Bauteil 41 aufgenommen. Dieses elektronische Bauteil 41 ist ein sogenannter Transponder, der ein Aktivierungssignal empfangen und seine unveränderbar gespeicherten Daten aussenden kann. Der Transponder weist elektronische Speicherbausteine auf und wird von einer zuschaltbaren Batterie 43 versorgt. Die Antenne, die elektronischen Speicherbausteine und die Batterie 43 sind auf einer Platine 45 untergebracht.

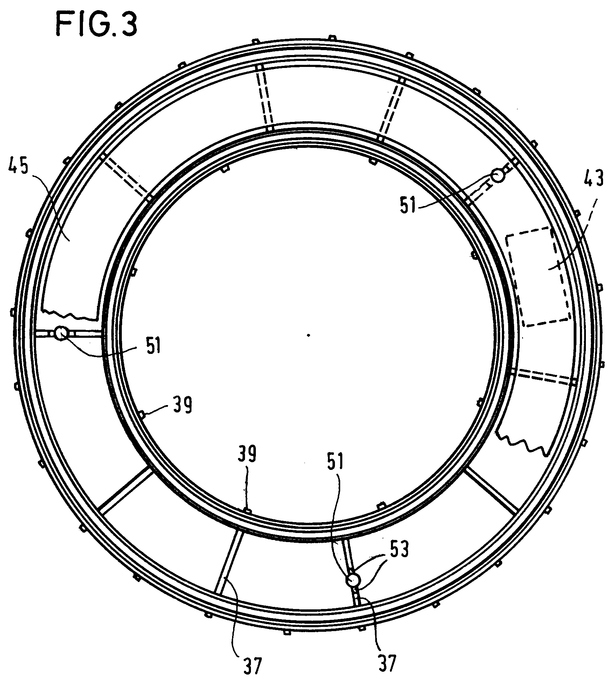

Zur Lagerung des elektronischen Bauteils 41 innerhalb des Gehäuses 5 sind, wie sich aus den Figuren 3-5 ergibt, drei besondere Lagerstifte 51 vorgesehen, deren Durchmesser größer als die Stärke der Aussteifungsspanten 37 ist und die in Bohrungen 47 der Platine 45 eingreifen. Die Lagerstifte 51 sind mit den Aussteifungsspanten 37 einstückig geformt, wobei sich radial innen und außen der Lagerstifte 51 Schultern 53 an den Lagerstift 51 anlehnen. Die Schultern 53 dienen dazu, die Platine 45 in axialer Richtung von den Aussteifungsspanten 37 in einem definierten Abstand zu halten. Dieser Abstand verhindert Beschädigungen der Platine 45 und verbessert das Sende- und Empfangsverhalten des Transponders. Die Platine 45 "schwebt" sozusagen in dem Gehäuse 5. Die Lagerstifte 51 wirken mit einer an der Deckelunterseite angeformten Sicherungsringrippe 49 zusammen, die in bezug auf die Gehäuseachse den gleichen radialen Abstand wie die Lagerstifte 51 aufweist und die den Lagerstiften 51 in geringem Abstand von wenigen 1/10 mm gegenüberliegt.

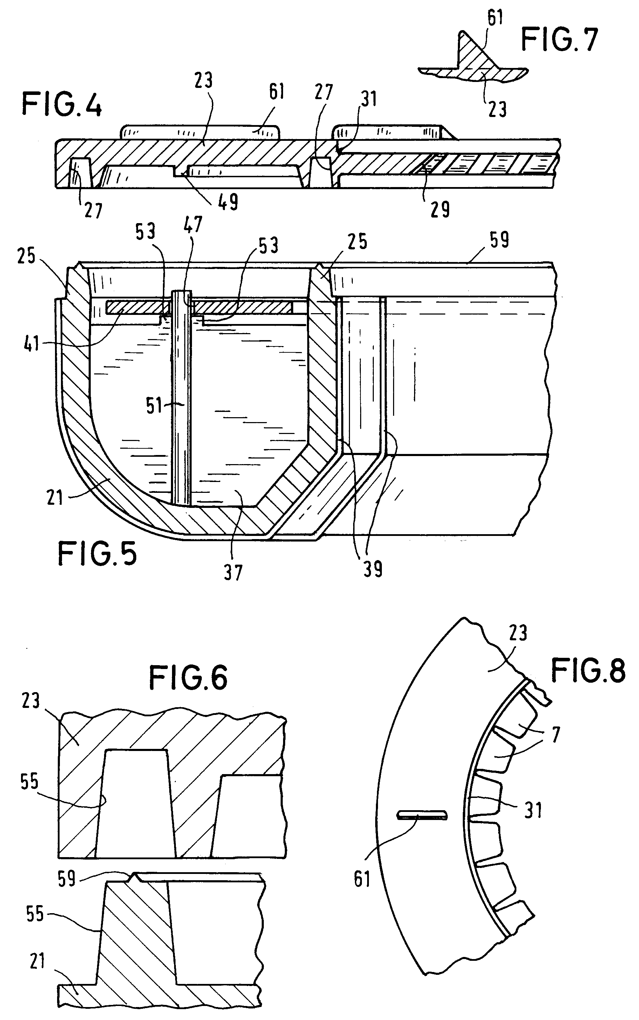

Im Hinblick auf eine einfache Herstellbarkeit sind die Ringrippen 25 des Ringes 21 in axialer Richtung konisch zulaufend geformt. Zusammen mit den in Fig. 4 gezeigten ebenfalls konisch zulaufenden Ringnuten 27 des Deckels 23 bewirken sie, daß sich Deckel 23 und Ring 21 beim Fügen selbst zentrieren. Die beim Zentrieren aufeinander abgleitenden Konusflächen 55,57 des Deckels 23 und des Rings 21 sind in vergrößerter Darstellung in Fig. 6 gezeigt. Die für das Reibschweißen erforderliche Schweißzugabe ist als Schweißmaterialring 59 an der Oberseite der Ringrippe 27 angeformt. Um das Reibschweißen zu erleichtern, befinden sich an der Deckeloberseite außerdem Sägezahnrippen 61, die einen Kraftangriff der Reibschweißvorrichtung an dem Deckel ermöglichen.

Die Herstellung von Ring 21 und Deckel 23 erfolgt aus Polyamid oder Pocan®, einem vorzugsweise glas- oder mineralfaserverstärktem PBT oder PET Polyester im Spritzgußverfahren. Beim Zusammenbau wird das elektronische Bauteil 41, um ein einfaches Zerlegen zum Recyceln zu ermöglichen, ohne Verklebung oder Verschweißung eingesetzt. Anschließend wird der Deckel 23 aufgesetzt und Ring 21 und Deckel 23 werden gemeinsam in eine Reibschweißmaschine eingesetzt. In dieser Reibschweißmaschine wird der Ring 21 an den Abstandshaltern 39 oder an sich radial von dem Ring nach außen erstreckenden Widerlagern 63, die gleichzeitig das Gehäuse 5 versteifen, festgehalten. Der Deckel 23 wird von einem mit einer Antriebswelle verbundenen Adapter gedreht, wobei der Adapter an der sich radial erstreckenden Sägezahnrippe 61 auf der Deckeloberseite angreift.

Nachdem das Gehäuse 5 der Befestigungsvorrichtung 1 verschweißt ist, wird es über die Gasflasche 3, von der die Gasflaschenabdeckung 11 abgenommen ist, gestülpt und über das Gewinde 9 gedrückt. Die von dem Deckel 23 kranzartig nach innen vorstehenden Zähne 7 klipsen dabei in die Rille 15.

Damit sich die Befestigungsvorrichtung 1 möglichst gut an die Kontur der Gasflasche 3 anpaßt, sind die Querschnitte des Rings 21 nicht exakt U-förmig, sondern der Verlauf der Wand des Rings 21 folgt an der Innenseite der Kontur der Gasflasche 3, so daß der Querschnitt an ein eingedrücktes "U" erinnert.

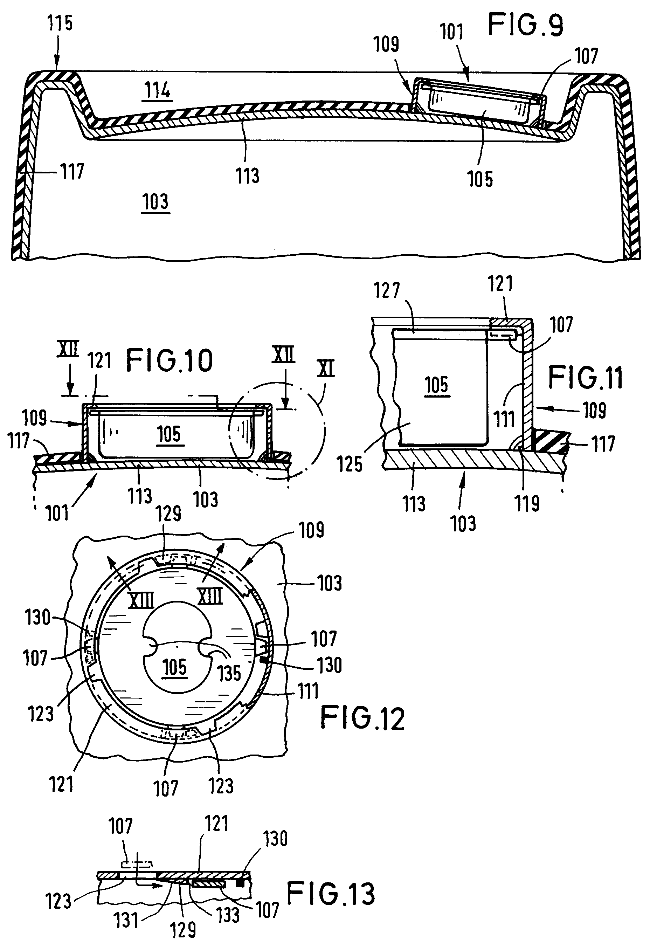

Die in den Figuren 9 bis 13 gezeigte zweite Ausführungsform der Befestigungsvorrichtung 101 ist an einem Getränkefaß 103 befestigt. Die Befestigungsvorrichtung 101 besteht aus einem flachen, kreisscheibenförmigen Gehäuse 105, von dem nach radial außen als Rastmittel vier gleichmäßig am Umfang des Gehäuses 105 verteilte Zungen 107 hervorragen.

Um die Befestigungsvorrichtung 101 an dem Getränkefaß 103 befestigen zu können, weist das Getränkefaß 103 eine Aufnahmevorrichtung 109 auf. Diese Aufnahmevorrichtung 109 besteht aus einem einseitig umgebördelten, zylindrischen Rohransatz 111, der an der Oberseite des Getränkefasses 103 angeordnet ist und mit dem Stahlbehälter 113 des Getränkefasses 103 verschweißt ist. Die Aufnahmevorrichtung 109 ist dabei vollständig in einer Vertiefung 114 aufgenommen, die durch den Stahlbehälter 113 und den oberen Rand 115 des Getränkefasses definiert wird. Dadurch kommt die Befestigungsvorrichtung 101, auch wenn das Getränkefaß 103 umstürzt, nicht mit dem Boden in Berührung.

Wenn das Getränkefaß einen äußeren Kunststoffmantel 117 aufweist, ist die Aufnahmevorrichtung 109 in einem Bereich angeordnet, in dem der Kunststoffmantel 117 durch Ausschneiden oder Ausfräsen entfernt worden ist. In diesem Fall ist der Rohransatz 111 an seiner Innenseite mittels einer Schweißnaht 119 mit dem Getränkefaß 103 verbunden. Wenn das Getränkefaß blank ist, kann die Schweißung auch an dem Außenumfang der Aufnahmevorrichtung 109 erfolgen.

Gemäß den Figuren 9 bis 13 ist die Aufnahmevorrichtung mit dem Getränkefaß 103 verschweißt. Es ist jedoch auch möglich, an dem Rohransatz 111 der Aufnahmevorrichtung 109 einen unteren Flansch vorzusehen und die Aufnahmevorrichtung mit einer zwischen dem Flansch und dem Getränkefaß angeordneten Klebschicht mit dem Getränkefaß 103 klebend zu verbinden.

Der obere umgebördelte Rand 121 des Rohransatzes 111 weist vier im gleichen Winkelabstand voneinander beabstandete Ausschnitte 123 auf, durch die die Zungen 107 hindurchgesteckt werden können.

Das Gehäuse 105 der Befestigungsvorrichtung 101 weist einen unteren, napfartigen Gehäuseteil 125 und einen flachen Deckel 127 auf, die durch Reibschweißung miteinander verbunden sind. Das Gehäuse 105 gemäß der zweiten Ausführungsform besteht, wie das Gehäuse 5 gemäß der ersten Ausführungsform vorzugsweise aus Pocan®.

Um die Befestigungsvorrichtung 101 an der Aufnahmevorrichtung 109 mit dem Getränkefaß 103 zu verbinden, wird das Gehäuse oberhalb der Aufnahmeeinrichtung 109 positioniert. Da der Außendurchmesser des Gehäuses 105 geringer ist als der Innendurchmesser des umgebördelten Randes 121 der Aufnahmevorrichtung 109, kann das Gehäuse 105 in dem Rohransatz 111 versenkt werden, wenn die Zungen oder Vorsprünge 107 über die Ausschnitte 121 bewegt werden. Durch Verdrehen der Befestigungsvorrichtung 101 im Uhrzeigersinn werden die Zungen 107 unter den umgebördelten Rand 121 gedreht. Um das Verdrehen der Befestigungsvorrichtung 101 zu erleichtern, ist an dem Deckel 127 eine Vertiefung 135 zum Ansatz eines Spezialschlüssels vorgesehen.

Zur Verriegelung weist der umgebördelte Rand Sägezähne 129 und Anschlagnasen 130 auf. Die Sägezähne 129 stehen von dem Rand 121 nach unten vor und weisen eine Gleitfläche 131 sowie eine Anschlagfläche 133 auf. Während des Verriegelns gleiten die Zungen 107 über die nach unten gerichteten schrägen Gleitflächen 131. Dabei werden die Zungen 107 nach unten gedrückt. Nach dem Überwinden der Sägezähne 129 schnappen die Vorsprünge 107 nach oben und liegen mit ihrem den Sägezähnen 129 abgewandten Ende gegen die Anschlagnasen 130 an. Beim Zurückdrehen gegen den Uhrzeigersinn schlagen die Zungen 107 an den Anschlagflächen 133 an. Die Befestigungsvorrichtung kann daher nur dann entnommen werden, wenn die Zungen 107 abgebrochen werden. Auf diese Weise stellen die Zungen 107 einen Originalitätsnachweis dar.

Vorzugsweise werden die Zungen 129 durch Umkippen des Rohrmaterials der Umbördelung 121 gebildet. Sie können aber auch als separate Teile unterhalb des umgebördelten Randes 121 angeklebt sein.

Der mit dem elektronischen Bauteil versehene Behälter 3, 103 wird in den meisten Fällen ein Mehrwegbehälter sein. Er wird in einem Lieferbetrieb mit dem zu liefernden Stoff befüllt. Der an dem Behälter 3,103 befestigte Transponder kann auf Aufforderung seine spezifische Kennummer senden und so an eine EDV übergeben. Dadurch werden die dieser Kennung zugeordneten Daten dem Behälter 3, 103 angeordnet.

## Patentansprüche

1. Befestigungsvorrichtung zur Befestigung eines elektronischen Bauteils (41) an einem Gegenstand (3;103) mit einem das elektronische Bauteil (41) aufnehmenden geschlossenen Gehäuse (5;105) und mit Rastmitteln (7;107) zum Angriff an einem Vorsprung (13;109) des Gegenstands (3;103).

2. Befestigungsvorrichtung nach Anspruch 1, dadurch gekennzeichnet, daß die Rastmittel mit einer Sollbruchstelle (31) versehene Zähne (7) sind, die nur eine einmalige Anbringung der Befestigungsvorrichtung (1) erlauben.

3. Befestigungsvorrichtung nach Anspruch 2, dadurch gekennzeichnet, daß die Zähne (7) einseitige Anschrägungen (29) aufweisen, die Erhebungen des Behälters übergleiten können.

4. Befestigungsvorrichtung nach einem der Ansprüche 1-3, dadurch gekennzeichnet, daß die Rastmittel (7) im eingerasteten Zustand den Gegenstand (3) einklemmen und derart vorgespannt sind, daß die Sollbruchstelle (31) unter Vorspannung ist.

5. Befestigungsvorrichtung nach einem der Ansprüche 1-4, dadurch gekennzeichnet, daß Gehäuse (5;105) und Rastmittel (7;107) einstückig ausgebildet sind.

6. Befestigungsvorrichtung nach einem der Ansprüche 1-5, dadurch gekennzeichnet, daß das Gehäuse (5) ringförmig ausgebildet ist.

7. Befestigungsvorrichtung nach Anspruch 6, dadurch gekennzeichnet, daß die Zähne (7) am Innenumfang des Gehäuses (5) radial nach innen ragen.

8. Befestigungsvorrichtung nach einem der Ansprüche 1-7, dadurch gekennzeichnet, daß das Gehäuse aus einem Ring (21) mit U-förmigen Querschnitten und einem im wesentlichen flachen ringförmigen Deckel (23) besteht, die miteinander verbunden sind.

9. Befestigungsvorrichtung nach Anspruch 8, dadurch gekennzeichnet, daß der Ring (21) zwei sich in axialer Richtung konisch verjüngende Ringrippen (25) aufweist, die mit konischen Ringnuten (27) des Deckels (23) zusammengreifen.

10. Befestigungsvorrichtung nach einem der Ansprüche 8 oder 9, dadurch gekennzeichnet, daß Ring (21) und Deckel (23) zwei sie verbindende Ringschweißnähte aufweisen.

11. Befestigungsvorrichtung nach einem der Ansprüche 1 bis 5, dadurch gekennzeichnet, daß das Gehäuse (105) scheibenförmig ist.

12. Befestigunsvorrichtung nach Anspruch 11, dadurch gekennzeichnet, daß das Gehäuse (105) kreisscheibenförmig ist.

13. Befestigungsvorrichtung nach Anspruch 11 und 12, dadurch gekennzeichnet, daß die Rastmittel (107) vom Außenumfang der Scheibe (105) nach außen ragende Zungen sind.

14. Befestigungsvorrichtung nach einem der Ansprüche 11-13, dadurch gekennzeichnet, daß das Gehäuse (105) aus einem Napf (125) und einem flachem Deckel (127) besteht, die miteinander verbunden sind.

15. Befestigungsvorrichtung nach Anspruch 14, dadurch gekennzeichnet, daß Napf (125) und Deckel (127) durch eine Ringschweißnaht verbunden sind.

16. Befestigungsvorrichtung nach Anspruch 10 oder 15, dadurch gekennzeichnet, daß die Ringschweißnähte durch Reibschweißung gebildet sind.

17. Befestigungsvorrichtung nach einem der Ansprüche 1-16, dadurch gekennzeichnet, daß zur Aussteifung des Gehäuses (5) innere Aussteifungsspanten (37) vorgesehen sind.

18. Befestigungsvorrichtung nach einem der Ansprüche 1-17, dadurch gekennzeichnet, daß zur Lagerung des elektronischen Bauteils (41) Lagerstifte (51) vorgesehen sind.

19. Befestigungsvorrichtung nach Anspruch 18, dadurch gekennzeichnet, daß die Lagerstifte (51) säulenartig aus einigen der Aussteifungsspanten (37) hervorstehen.

20. Befestigungsvorrichtung nach Anspruch 19, dadurch gekennzeichnet, daß die Aussteifungsspanten (37) an die Lagerstifte (51) angrenzende Schultern (53) aufweisen.

21. Befestigungsvorrichtung nach einem der Ansprüche 17-20, dadurch gekennzeichnet, daß an dem Gehäuse (5) eine Sicherungsrippe (49) gebildet ist, die den Lagerstiften (51) in axialer Richtung des Gehäuses mit geringem Abstand gegenüberliegt.

22. Befestigungsvorrichtung nach einem der Ansprüche 9, 10, 14, 15 oder 16, dadurch gekennzeichnet, daß an dem Deckel (23;127), Ring (21) oder Napf (125) radiale Sägezahnrippen (61) vorgesehen sind.

23. Befestigungsvorrichtung nach einem der Ansprüche 1-10, dadurch gekennzeichnet, daß an dem Innenumfang des Gehäuses (5) äußere Abstandshalter (39) vorgesehen sind.

24. Befestigungsvorrichtung nach einem der Ansprüche 1-23, dadurch gekennzeichnet, daß das Gehäuse (5;105) wasserdicht ausgebildet ist.

25. Befestigungsvorrichtung nach einem der Ansprüche 1-24, dadurch gekennzeichnet, daß das Gehäuse (5;105) säure- und laugenbeständig ist.

26. Befestigungsvorrichtung nach einem der Ansprüche 1-25, dadurch gekennzeichnet, daß das Gehäuse (5;105) bis ca. 200 °C hitzebeständig ist.

27. Befestigungsvorrichtung nach einem der Ansprüche 1-26, dadurch gekennzeichnet, daß das Gehäuse (5;105) bis ca. -80 °C kältebeständig ist.

28. Befestigungsvorrichtung nach einem der Ansprüche 1-27, dadurch gekennzeichnet, daß das Gehäuse (5;105) im wesentlichen aus Polyamid besteht.

29. Befestigungsvorrichtung nach einem der Ansprüche 1-27, dadurch gekennzeichnet, daß das Gehäuse (5;105) aus Pocan® besteht.
